# FASCICULE DE BREVET EUROPEEN

(11) **EP 4 293 391 B1**
(45) Date de publication et mention de la délivrance du brevet: **19.03.2025**
(21) Numéro de dépôt: 23177879.6
(22) Date de dépôt: 07.06.2023
(51) Int. Cl.: G01S 17/894, G01S 7/4914, G01S 7/4915, G01S 7/48

(54) **CAPTEUR TEMPS DE VOL ET PROCÉDÉ DE MESURE DE DISTANCES**
FLUGZEITSENSOR UND VERFAHREN ZUR ABSTANDSMESSUNG
TIME-OF-FLIGHT SENSOR AND METHOD FOR MEASURING DISTANCES

(30) Priorité: 14.06.2022 FR 2205763
(43) Date de publication de la demande: 20.12.2023
(73) Titulaire: STMICROELECTRONICS (GRENOBLE 2) SAS, 38000 Grenoble (FR)
(72) Inventeur: AUGEY, Thibault, 38100 GRENOBLE (FR); TEYSSIER, Jeremie, 38000 GRENOBLE (FR)
(74) Mandataire: Casalonga

(56) Documents cités:
- US-A1- 2019 369 247
- US-A1- 2021 209 778
- HAO JIANG ET AL: "A Novel Depth Map Generation Method Based on K-Means Clustering and Depth Pattern Recognition", INTERNET OF THINGS (ITHINGS/CPSCOM), 2011 INTERNATIONAL CONFERENCE ON AND 4TH INTERNATIONAL CONFERENCE ON CYBER, PHYSICAL AND SOCIAL COMPUTING, IEEE, 19 October 2011 (2011-10-19), pages 638 - 643, XP032107061, ISBN: 978-1-4577-1976-9, DOI: 10.1109/ITHINGS/CPSCOM.2011.31

## Description

Des modes de réalisation et de mise en œuvre concernent les capteurs de temps de vol.

Un capteur temps de vol est un capteur permettant de mesurer des distances entre ce capteur et des éléments d'une scène dans laquelle ce capteur est placé. Le capteur temps de vol est configuré pour émettre des rayons lumineux dans la scène. Ces rayons lumineux peuvent être réfléchis par les différents éléments de la scène. Par ailleurs, le capteur temps de vol peut comporter une matrice de pixels photosensibles. Chaque pixel photosensible de la matrice est configuré pour détecter des signaux luminaux incidents sur ce pixel. Chaque pixel permet ainsi de détecter les rayons lumineux émis par le capteur puis réfléchis par les différents éléments. La détection de rayons réfléchis par un pixel de la matrice permet au capteur temps de vol de calculer une distance entre le capteur et les éléments de la scène ayant réfléchis les rayons lumineux. Le capteur temps de vol génère alors une image de la scène définissant, pour chaque pixel de l'image, une distance entre le capteur et un élément de la scène.

Les demandes de brevet états-uniennes publiées sous les numéros US 2021/209778 A1 et US 2019/369247 illustrent des capteurs temps de vol de l'état de la technique.

Certains capteur temps de vol utilisent un projecteur de point. L'image ainsi générée par le capteur à temps de vol comporte une pluralité de points, chaque point couvrant plusieurs pixels. Ces points correspondent aux pixels de la matrice détectant les rayons émis par le capteur qui sont réfléchis par les éléments de la scène. De tels capteurs temps de vol permettent de réduire les perturbations liées à la lumière ambiante dans la scène. La concentration locale de la lumière en chaque point permet d'améliorer les performances de détermination de la distance.

Il est connu de calculer une valeur moyenne des distances associés aux pixels d'un même point. Cette valeur moyenne des distances est ensuite associée à ce point de l'image.

Il est possible qu'un point de l'image comprenne des pixels délivrant des valeurs de distance pour différents éléments de la scène disposés à des distances différentes du capteur. Dans ce cas, le capteur associe au point une valeur moyenne des distances calculées qui peut correspondre à une distance pour laquelle il est possible qu'aucun élément ne soit réellement présent dans la scène. La valeur associée à ce point est ainsi erronée. Un tel capteur de temps de vol est donc relativement peu fiable dans certaines conditions et ne permet pas de détecter plusieurs éléments sur un même point de l'image.

Il existe donc un besoin de proposer un capteur de temps de vol fiable dans les conditions susmentionnés.

Selon un aspect, il est proposé un capteur temps de vol comprenant :
- un dispositif émetteur configuré pour émettre des rayons lumineux, dans une scène dans laquelle le capteur temps de vol est placé,
- une matrice de pixels photosensibles configurée pour recevoir des signaux lumineux provenant de la scène et pour générer une image illustrant des points associés aux rayons émis par le dispositif émetteur, réfléchis par des éléments de la scène et reçus par la matrice de pixels, chaque point couvrant une pluralité de pixels de l'image, chaque pixel de l'image étant associé à une valeur de distance mesurée entre le capteur temps de vol et un élément de la scène,
le capteur temps de vol étant caractérisé en ce qu'il comprend une unité de traitement configurée pour, pour chaque point de l'image :
o effectuer un partitionnement des pixels de ce point en au moins un groupe de pixels,
o un calcul, pour chaque groupe de pixels, d'une valeur représentative des valeurs de distance des pixels de ce groupe, cette valeur représentative de distance étant alors appliquée pour chaque pixel du groupe de pixels.

Un tel capteur temps de vol permet d'isoler les points de l'image des autres, puis de définir des groupes de pixels pour chaque point de l'image en fonction de leurs valeurs de distance. Les groupes d'un point de l'image peuvent alors être associés à la présence de différents éléments de la scène.

Ainsi, un tel capteur temps de vol permet de détecter plusieurs éléments de la scène situés sur un même point de l'image, et de retourner, pour ce point de l'image, un même nombre de valeurs de distance que d'éléments sur ce point.

Un tel capteur temps de vol permet également de limiter les erreurs de valeurs de distance associées à certains pixels d'un point de l'image. En effet, le fait de grouper les pixels ayant des valeurs de distances proches les unes des autres peut permettre d'extraire les pixels ayant des valeurs de distance aberrantes. En ne prenant pas en compte les pixels ayant des valeurs de distances aberrantes, le rapport signal sur bruit d'un tel capteur est amélioré.

Un tel capteur temps de vol est donc fiable et précis.

Dans un mode de réalisation avantageux, l'unité de traitement est également configurée pour fusionner des groupes de pixels d'un même point si la différence des valeurs représentatives calculées pour ces groupes de pixels est inférieure à un seuil donné, puis pour calculer une nouvelle valeur représentative de distance pour le nouveau groupe de pixels formé par la fusion de ces groupes. De la sorte, l'unité de traitement permet d'éviter d'avoir plusieurs groupes associés à la présence d'un même élément de la scène.

De préférence, le partitionnement des pixels de chaque point comporte une mise en œuvre d'un algorithme de segmentation, notamment un algorithme de partitionnement en k-moyennes.

Selon un autre aspect, il est proposé un procédé de mesure de distances entre un capteur temps de vol et des éléments d'une scène dans laquelle le capteur temps de vol est placé, le procédé comprenant :
- une émission de points lumineux dans la scène par un dispositif émetteur du capteur temps de vol,
- une réception par une matrice de pixels du capteur temps de vol des signaux lumineux provenant de la scène et
- une génération par la matrice de pixels d'une image illustrant des points associés aux rayons émis par le dispositif émetteur, réfléchis par des éléments de la scène et reçus par la matrice de pixels, chaque point couvrant une pluralité de pixels de l'image, chaque pixel de l'image étant associé à une valeur de distance mesurée entre le capteur temps de vol et un élément de la scène,
   le procédé étant caractérisé en ce qu'il comprend, pour chaque point de l'image :
- un partitionnement des pixels de ce point en au moins un groupe de pixels,
- un calcul pour chaque groupe de pixels, d'une valeur représentative des valeurs de distance des pixels de ce groupe, cette valeur représentative de distance étant alors appliquée pour chaque pixel du groupe de pixels.

Avantageusement, le procédé comprend en outre une fusion des groupes d'un même point si la différence des valeurs représentatives calculées pour ces groupes de pixels est inférieure à un seuil donné, puis un calcul d'une nouvelle valeur représentative de distance pour le nouveau groupe formé par la fusion de ces groupes.

De préférence, le partitionnement des pixels de chaque point comporte une mise en œuvre d'un algorithme de segmentation, notamment un algorithme de partitionnement en k-moyennes.

D'autres avantages et caractéristiques de l'invention apparaîtront à l'examen de la description détaillée de modes de réalisation, nullement limitatifs, et des dessins annexés sur lesquels :
[Fig 1]
[Fig 2]
[Fig 3]
[Fig 4]
[Fig 5]

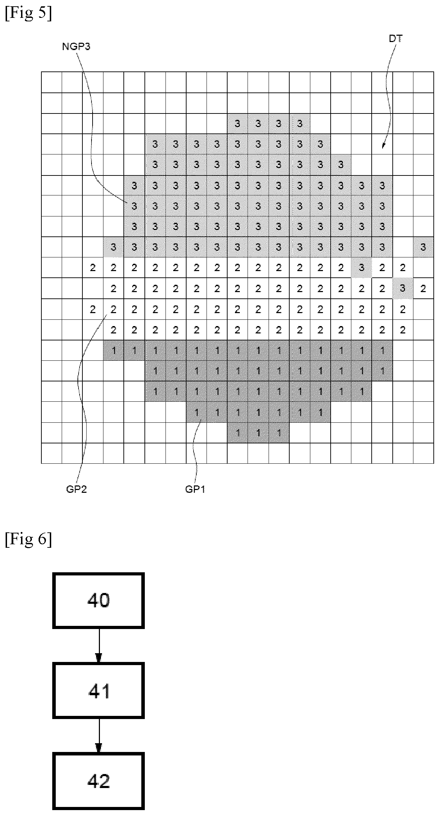

[Fig 6] illustrent des modes de réalisation et de mise en œuvre de l'invention.

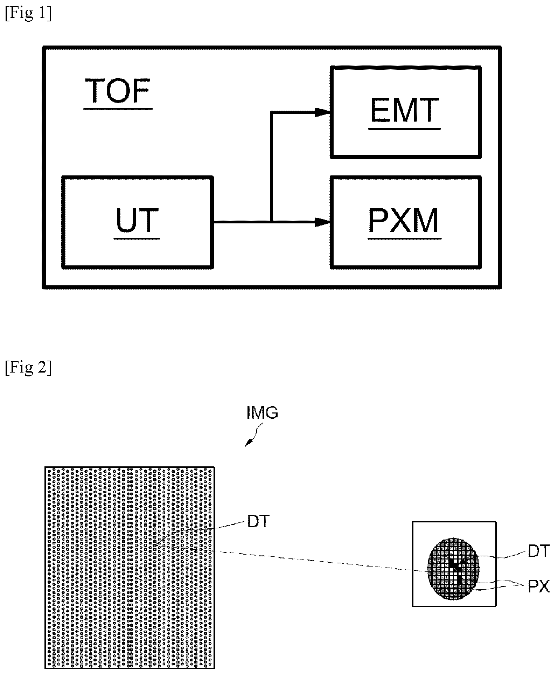

La figure 1 illustre un capteur temps de vol TOF. Ce capteur temps de vol TOF peut être un capteur de mesure indirect du temps de vol (connu également par l'acronyme « iTOF » de l'anglais « indirect time-of-flight »). Le capteur temps de vol TOF comporte un dispositif émetteur EMT et une matrice de pixels PXM. Le capteur temps de vol TOF comporte également une unité de contrôle et de traitement UT configuré pour contrôler l'émetteur EMT et la matrice de pixels PXM.

Le dispositif émetteur EMT est configuré pour émettre des rayons lumineux dans une scène dans laquelle le capteur TOF est placé. Ces rayons lumineux sont alors réfléchis par les différents éléments de la scène vers la matrice de pixels PXM.

La matrice de pixels PXM est configurée pour détecter les signaux lumineux qu'elle reçoit.

La matrice de pixels PXM est ainsi configurée pour générer des images IMG de la scène à partir des signaux lumineux qu'elle détecte. La figure 2 illustre un exemple d'image IMG pouvant être générée par la matrice de pixels PXM. L'image est composé de pixels PX associés aux différents pixels de la matrice de pixels PXM.

Chaque pixel PX de l'image IMG est associé à une valeur de distance mesurée entre le capteur temps de vol CPT et un élément de la scène.

Chaque image IMG présente un ensemble de points DT correspondant aux différents rayons réfléchis par les éléments de la scène et captés par la matrice de pixels PXM. Chaque point DT de l'image IMG couvre un ensemble de pixels PX de l'image. Par exemple, un point DT de l'image IMG peut couvrir un ensemble de 10x10 pixels.

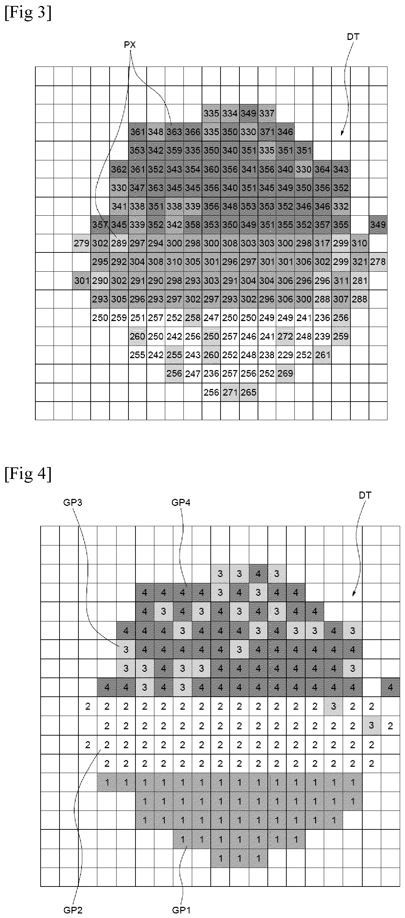

La figure 3 illustre les valeurs de distance des pixels d'un point DT de l'image.

L'unité de traitement UT est configurée pour traiter chaque image IMG générée par la matrice de pixels PXM. En particulier, l'unité de traitement UT est configurée pour effectuer un partitionnement des pixels PX pour chaque point DT de l'image IMG. Ainsi, pour chaque point DT de l'image IMG, l'unité de traitement UT est configurée pour définir au moins un groupe de pixels PX associés à ce point DT.

En particulier, pour chaque point DT de l'image IMG, l'unité de traitement UT est configurée pour grouper les pixels PX du point DT présentant des valeurs de distance qui sont proches les unes des autres. Cela permet d'identifier différents éléments de la scène représentés sur un même point de l'image. Par exemple, des pixels PX peuvent être considérés comme suffisamment proches pour être regroupés dans un même groupe si la différence entre leurs valeurs de distance est inférieure à 2% de la moyenne des deux distances (cette valeur de 2% étant un paramètre de l'algorithme qui peut être ajusté en fonction des performances du capteur temps de vol).

Bien entendu, différents algorithmes de partitionnement peuvent être mis en œuvre pour définir les groupes de pixels PX d'un point DT de l'image IMG. À titre d'exemple, les groupes peuvent être définis par un algorithme de partitionnement en k-moyennes (ou « k-means » en anglais). En variante, il est possible de définir les groupes par une analyse d'histogrammes des valeurs de distance des pixels PX du point DT de l'image de façon à détecter des maximums locaux pour identifier les différents éléments de la scène représentés sur le point DT.

La figure 4 illustre le point DT de la figure 3 dans lequel les pixels ayant des valeurs de distance proches ont été groupés dans des groupes GP1, GP2, GP3, GP4.

Pour chaque point DT de l'image, l'unité de traitement est configurée pour calculer pour chaque groupe une valeur représentative des valeurs de distance de pixels PX de ce groupe. Cette valeur représentative d'un groupe peut être une valeur moyenne des valeurs de distance de pixels PX de ce groupe.

Si deux groupes d'un même point DT ont des valeurs représentatives proches l'une de l'autre, l'unité de traitement peut être configurée pour fusionner ces deux groupes. Par exemple, des valeurs représentatives peuvent être considérées comme proches lorsque leur différence est inférieure à 2% de la moyenne des deux distances (cette valeur de 2% étant un paramètre de l'algorithme qui peut être ajusté en fonction des performances du capteur temps de vol). L'unité de traitement est alors configurée pour calculer une nouvelle valeur représentative pour le nouveau groupe formé résultant de la fusion des deux groupes. Par exemple, la figure 5 illustre le point de la figure 3 dans lequel les groupes GP3 et GP4 de pixels ont été fusionnés de façon à former un nouveau groupe NGP3 de pixels.

L'unité de traitement génère ainsi une image finale dans laquelle les points DT de l'image initiale ont pour valeurs de distance les valeurs représentatives calculées pour chaque groupe défini pour chaque point DT.

Un tel capteur temps de vol permet de détecter plusieurs éléments de la scène situés sur un même point DT de l'image, et de retourner, pour ce point DT de l'image, un même nombre de valeurs de distance que d'éléments sur ce point DT.

Un tel capteur temps de vol permet également de limiter les erreurs de valeurs de distance associées à certains pixels PX d'un point DT de l'image. En effet, le fait de grouper les pixels PX ayant des valeurs de distances proches les unes des autres peut permettre d'extraire les pixels PX ayant des valeurs de distance aberrantes. En ne prenant pas en compte les pixels PX ayant des valeurs de distances aberrantes, le rapport signal sur bruit d'un tel capteur est amélioré.

La figure 6 illustre un procédé de traitement d'une image générée par une matrice de pixels PXM d'un capteur temps de vol tel que décrit précédemment. Comme vu précédemment, l'image générée par la matrice de pixels PXM comporte plusieurs points DT.

Le procédé comporte une mise en œuvre 40 d'un algorithme de partitionnement des pixels PX de chaque point DT. La mise en œuvre d'un tel algorithme permet de définir des groupes de pixels PX dans chaque point DT de l'image.

Le procédé comporte également, pour chaque groupe de chaque point DT, un calcul d'une valeur représentative des valeurs de distance des pixels PX de ce groupe.

Le procédé peut également comprendre une fusion 41 des groupes d'un même point DT ayant des valeurs représentatives proches les unes des autres. Le procédé comprend alors, suite à la fusion des groupes, un calcul 42 d'une nouvelle valeur représentative pour le nouveau groupe formé résultant de la fusion de ces groupes.

## Revendications

1. Capteur temps de vol comprenant :
- un dispositif émetteur (EMT) configuré pour émettre des rayons lumineux, dans une scène dans laquelle le capteur temps de vol est placé,
- une matrice de pixels photosensibles (PXM) configurée pour recevoir des signaux lumineux provenant de la scène et pour générer une image (IMG) illustrant des points (DT) associés aux rayons émis par le dispositif émetteur (EMT), réfléchis par des éléments de la scène et reçus par la matrice de pixels, chaque point (DT) couvrant une pluralité de pixels (PX) de l'image, chaque pixel de l'image étant associé à une valeur de distance mesurée entre le capteur temps de vol et un élément de la scène,
le capteur temps de vol étant **caractérisé en ce qu'**il comprend également une unité de traitement (UT) configurée pour, pour chaque point de l'image :
o effectuer un partitionnement des pixels (PX) de ce point en au moins un groupe (GP1, GP2, GP3, GP4) de pixels (PX),
o un calcul pour chaque groupe (GP1, GP2, GP3, GP4) de pixels (PX), d'une valeur représentative des valeurs de distance des pixels de ce groupe, cette valeur représentative de distance étant alors appliquée pour chaque pixel du groupe de pixels.

2. Capteur temps de vol selon la revendication 1, dans lequel l'unité de traitement (UT) est également configurée pour fusionner des groupes (GP3, GP4) de pixels (PX) d'un même point (DT) si la différence des valeurs représentatives calculées pour ces groupes de pixels (PX) est inférieure à un seuil donné, puis pour calculer une nouvelle valeur représentative de distance pour le nouveau groupe (NGP3) de pixels (PX) formé par la fusion de ces groupes.

3. Capteur temps de vol selon l'une des revendications 1 ou 2, dans lequel le partitionnement des pixels (PX) de chaque point comporte une mise en œuvre d'un algorithme de segmentation.

4. Capteur temps de vol selon la revendication 3, dans lequel l'algorithme de segmentation est un algorithme de partitionnement en k-moyennes.

5. Procédé de mesure de distances entre un capteur temps de vol et des éléments d'une scène dans laquelle le capteur temps de vol (TOF) est placé, le procédé comprenant :
- une émission de rayons lumineux dans la scène par un dispositif émetteur (EMT) du capteur temps de vol (TOF),
- une réception par une matrice de pixels (PXM) du capteur temps de vol (CPT) des signaux lumineux provenant de la scène et
- une génération par la matrice de pixels (PX) d'une image illustrant des points (DT) associés aux rayons émis par le dispositif émetteur (EMT), réfléchis par des éléments de la scène et reçus par la matrice de pixels, chaque point (DT) couvrant une pluralité de pixels (PX) de l'image, chaque pixel de l'image étant associé à une valeur de distance mesurée entre le capteur temps de vol et un élément de la scène,
le procédé étant **caractérisé en ce qu'**il comprend, pour chaque point (DT) de l'image :
- un partitionnement des pixels (PX) de ce point en au moins un groupe (GP1, GP2, GP3, GP4) de pixels (PX),
- un calcul pour chaque groupe (GP1, GP2, GP3, GP4) de pixels (PX), d'une valeur représentative des valeurs de distance des pixels de ce groupe, cette valeur représentative de distance étant alors appliquée pour chaque pixel du groupe de pixels.

6. Procédé selon la revendication 5, comportant en outre une fusion des groupes (GP3, GP4) d'un même point (DT) si la différence des valeurs représentatives calculées pour ces groupes de pixels (PX) est inférieure à un seuil donné, puis un calcul d'une nouvelle valeur représentative de distance pour le nouveau groupe (NGP3) formé par la fusion de ces groupes (GP3, GP4).

7. Procédé selon l'une quelconque des revendications 5 ou 6, dans lequel le partitionnement des pixels (PX) de chaque point (DT) comporte une mise en œuvre d'un algorithme de segmentation.

8. Procédé selon la revendication 7, dans lequel l'algorithme de segmentation est un algorithme de partitionnement en k-moyennes.

## Patentansprüche

1. Flugzeitsensor, der Folgendes umfasst:
- eine Sendevorrichtung (EMT), die so konfiguriert ist, dass sie Lichtstrahlen in einer Szene aussendet, in der der Flugzeitsensor platziert ist,
- eine lichtempfindliche Pixelmatrix (PXM), die so konfiguriert ist, dass sie Lichtsignale von der Szene empfängt und ein Bild (IMG) erzeugt, das Punkte (DT) veranschaulicht, die mit den von der Sendevorrichtung (EMT) ausgesendeten Strahlen verbunden sind, von Elementen der Szene reflektiert und von der Pixelmatrix empfangen werden, wobei jeder Punkt (DT) eine Vielzahl von Pixeln (PX) des Bildes abdeckt, wobei jedes Pixel des Bildes mit einem zwischen dem Flugzeitsensor und einem Element der Szene gemessenen Abstandswert verbunden ist,
wobei der Flugzeitsensor **dadurch gekennzeichnet ist, dass** er auch eine Verarbeitungseinheit (UT) umfasst, die für jeden Punkt des Bildes für Folgendes konfiguriert ist:
o Durchführen einer Partitionierung der Pixel (PX) des Punktes in mindestens eine Gruppe (GP1, GP2, GP3, GP4) von Pixeln (PX),
o Berechnen eines repräsentativen Werts für die Abstandswerte der Pixel der Gruppe für jede Gruppe (GP1, GP2, GP3, GP4) von Pixeln (PX), wobei der repräsentative Abstandswert dann für jedes Pixel der Gruppe von Pixeln angewendet wird.

2. Flugzeitsensor nach Anspruch 1, wobei die Verarbeitungseinheit (UT) auch so konfiguriert ist, dass sie Gruppen (GP3, GP4) von Pixeln (PX) desselben Punkts (DT) zusammenführt, wenn die Differenz der für die Gruppen von Pixeln (PX) berechneten repräsentativen Werte unter einem bestimmten Schwellenwert liegt, und dann einen neuen repräsentativen Abstandswert für die neue Gruppe (NGP3) von Pixeln (PX) berechnet, die durch das Zusammenführen der Gruppen gebildet wurde.

3. Flugzeitsensor nach einem der Ansprüche 1 oder 2, wobei das Partitionieren der Pixel (PX) jedes Punktes das Ausführen eines Segmentierungsalgorithmus umfasst.

4. Flugzeitsensor nach Anspruch 3, wobei der Segmentierungsalgorithmus ein k-Mittelwert-Partitionsalgorithmus ist.

5. Verfahren zum Messen von Abständen zwischen einem Flugzeitsensor und Elementen einer Szene, in der der Flugzeitsensor (TOF) platziert ist, wobei das Verfahren Folgendes umfasst:
- Aussenden von Lichtstrahlen in der Szene durch eine Sendevorrichtung (EMT) des Flugzeitsensors (TOF),
- Empfangen der Lichtsignale von der Szene durch eine Pixelmatrix (PXM) des Flugzeitsensors (CPT), und
- Erzeugen eines Bildes, das Punkte (DT) verschaulicht, die mit den von der Sendevorrichtung (EMT) ausgesendeten Strahlen verbunden sind, von Elementen der Szene reflektiert und von der Pixelmatrix empfangen werden, durch die Pixelmatrix (PX), wobei jeder Punkt (DT) eine Vielzahl von Pixeln (PX) des Bildes abdeckt, wobei jedes Pixel des Bildes mit einem zwischen dem Flugzeitsensor und einem Element der Szene gemessenen Abstandswert verbunden ist,
wobei das Verfahren **dadurch gekennzeichnet ist, dass** es für jeden Punkt (DT) des Bildes Folgendes umfasst:
- Partitionieren der Pixel (PX) des Punktes in mindestens eine Gruppe (GP1, GP2, GP3, GP4) von Pixeln (PX),
- Berechnen eines repräsentativen Werts der Abstandswerte der Pixel der Gruppe für jede Gruppe (GP1, GP2, GP3, GP4) von Pixeln (PX), wobei der repräsentative Abstandswert dann für jedes Pixel der Gruppe von Pixeln angewendet wird.

6. Verfahren nach Anspruch 5, das ferner das Zusammenführen der Gruppen (GP3, GP4) desselben Punktes (DT), wenn die Differenz der für die Gruppen von Pixeln (PX) berechneten repräsentativen Werte unter einem bestimmten Schwellenwert liegt, und anschließend das Berechnen eines neuen repräsentativen Abstandswerts für die neue Gruppe (NGP3), die durch das Zusammenführen der Gruppen (GP3, GP4) gebildet wurde, umfasst.

7. Verfahren nach einem der Ansprüche 5 oder 6, wobei das Partitionieren der Pixel (PX) jedes Punktes (DT) das Ausführen eines Segmentierungsalgorithmus umfasst.

8. Verfahren nach Anspruch 7, wobei der Segmentierungsalgorithmus ein k-Mittelwert-Partitionsalgorithmus ist.

## Claims

1. A time-of-flight sensor comprising:
- an emitting device (EMT) configured to emit light rays, in a scene in which the time-of-flight sensor is placed,
- a photosensitive pixel matrix (PXM) configured to receive light signals from the scene and to generate an image (IMG) illustrating dots (DT) associated with the rays emitted by the emitting device (EMT), reflected by elements of the scene and received by the pixel matrix, each dot (DT) covering a plurality of pixels (PX) of the image, each pixel of the image being associated with a distance value measured between the time-of-flight sensor and an element of the scene,
the time-of-flight sensor being **characterised in that** it also comprises a processing unit (UT) configured to, for each dot of the image:
o partition the pixels (PX) of this dot into at least one group (GP1, GP2, GP3, GP4) of pixels (PX),
o calculate for each group (GP1, GP2, GP3, GP4) of pixels (PX), a value representative of the distance values of the pixels of this group, this representative distance value being then applied for each pixel of the group of pixels.

2. The time-of-flight sensor according to claim 1, wherein the processing unit (UT) is also configured to merge groups (GP3, GP4) of pixels (PX) of a same dot (DT) if the difference of the representative values calculated for these pixel groups (PX) is less than a given threshold, then to calculate a new representative distance value for the new group (NGP3) of pixels (PX) formed by merging these groups.

3. The time-of-flight sensor according to any of claims 1 or 2, wherein partitioning the pixels (PX) of each dot includes implementing a segmentation algorithm.

4. The time-of-flight sensor of claim 3, wherein the segmentation algorithm is a k-mean partitioning algorithm.

5. A method for measuring distances between a time-of-flight sensor and elements of a scene in which the time-of-flight (TOF) sensor is placed, the method comprising:
- °emitting light rays in the scene by an emitting device (EMT) of the time-of-flight (TOF) sensor,
- °receiving, by a pixel matrix (PXM) of the time-of-flight sensor (CPT), the light signals coming from the scene and
- generating by the pixel matrix (PX) an image illustrating dots (DT) associated with the rays emitted by the emitting device (EMT), reflected by elements of the scene and received by the pixel matrix, each dot (DT) covering a plurality of pixels (PX) of the image, each pixel of the image being associated with a distance value measured between the time-of-flight sensor and an element of the scene,
the method being **characterised in that** it comprises, for each dot (DT) of the image:
- partitioning the pixels (PX) of this dot into at least one group (GP1, GP2, GP3, GP4) of pixels (PX),
- calculating for each group (GP1, GP2, GP3, GP4) of pixels (PX), a value representative of the distance values of the pixels of this group, this representative distance value being then applied for each pixel of the group of pixels.

6. The method according to claim 5, further comprising merging the groups (GP3, GP4) of a same dot (DT) if the difference of the representative values calculated for these groups of pixels (PX) is less than a given threshold, then calculating a new representative distance value for the new group (NGP3) formed by merging these groups (GP3, GP4).

7. The method according to any of claims 5 or 6, wherein partitioning the pixels (PX) of each dot (DT) includes implementing a segmentation algorithm.

8. The method according to claim 7, wherein the segmentation algorithm is a k-mean partitioning algorithm.
